# EUROPÄISCHE PATENTSCHRIFT

(11) **EP 1 131 224 B1**
(45) Veröffentlichungstag und Bekanntmachung des Hinweises auf die Patenterteilung: **01.10.2003**
(21) Anmeldenummer: 99965400.7
(22) Anmeldetag: 16.11.1999
(51) Int. Cl.: B60N 2/02, B60N 2/00, B60N 2/04, B60N 2/22, B60N 2/18, B60N 2/427

(54) **Fahrzeugsitz**
Motor Vehicle Seat
Siège de véhicule

(30) Priorität: 18.11.1998 DE 19853156
(43) Veröffentlichungstag der Anmeldung: 12.09.2001
(73) Patentinhaber: Girsberger Holding AG, 4922 Bützberg (CH)
(72) Erfinder: AUBERT, Thierry, CH-8003 Zürich (CH); ANGST, Philipp, CH-5000 Aarau (CH)
(74) Vertreter: Maucher, Wolfgang, Dipl.-Ing.
(86) Internationale Anmeldenummer: EP9908809
(87) Internationale Veröffentlichungsnummer: WO00029249

(56) Entgegenhaltungen:
- EP-A- 0 489 310
- EP-A- 0 865 960
- WO-A-97/10117
- DE-A- 19 644 376
- US-A- 4 935 680
- US-A- 5 320 409
- US-A- 5 449 218
- US-A- 5 558 399

## Beschreibung

Die Erfindung betrifft einen Sitz mit zumindest einem Sitz- und wenigstens einem Rückenlehnenteil, welche an einem Sitzträger gehalten und relativ zu diesem mittels Stellantrieben verstellbar sind, wobei die Stellantriebe mit wenigstens einem Körperpositionsmelder in Steuerverbindung stehen zum Heranfahren oder Nachfahren des wenigstens einen Sitz- und mindestens einen Rückenlehnenteiles an die von einer auf dem Sitz befindlichen Person eingenommene Körperposition oder zum Nachfahren des wenigstens einen Sitz- und mindestens einen Rückenlehnenteiles entsprechend einer Körperbewegung der auf dem Sitz befindlichen Person.

Aus der EP 0 865 960 A1 der Anmelderin ist bereits ein Fahrzeugsitz mit einem Sitz- und einem Rückenlehnenteil bekannt, die über eine Gelenkachse verschwenkbar miteinander verbunden und an einem Sitzträger in Zwangsführungen verstellbar geführt sind. Der vorbekannte Sitz weist eine Halteübertragung auf, mittels der das Sitzteil und das Rückenlehnenteil in verschiedenen Stellpositionen festlegbar sind. Diese bei festgelegter Sitzposition wirksame Halteübertragung ist derart energieabsorbierend nachgiebig, daß der Sitz mittels einer während einer Heckkollision oder einer Frontalkollision crashbedingten Krafteinwirkung durch den Benutzer des Sitzes von der gewählten Sitzposition in eine vorgegebene Sicherheitsstellung bewegbar ist.

Der vorbekannte Fahrzeugsitz bietet dem Anwender sowohl bei Heckais auch bei Frontalkollisionen ein hohes Maß an Sicherheit.

Darüber hinaus gestattet der vorbekannte Sitz dem Anwender, den Sitz in eine ihm genehme Stellposition zu verstellen. Zum Verstellen von Sitz- und Rückenlehnenteil ist jedoch die Halteübertragung zu lösen und der Sitz in den Zwangsführungen des Sitzträgers mit einem gewissen Kraftaufwand zu verstellen.
Der Sicherheit und dem Komfort, welcher der vorbekannte Fahrzeugsitz dem Anwender in der gewählten Sitz- und Stellposition bieten kann, steht der Kraft- und Zeitaufwand gegenüber, um diesen Sitz in die dem Anwender genehme Position zu bringen.

Aus DE 196 44 376 A1 ein Fahrzeugsitz der eingangs erwähnten Art bekannt, bei dem das Sitz- und das Rückenlehnenteil mittels einer motorischen Verstellvorrichtung verstellbar sind. Dabei ist vorgesehen, daß im Sitzteil und im Rückenlehnenteil, die dabei als Sitzkomponenten bezeichnet werden, individuelle Drucksensoren und Antriebe angeordnet sind, deren Wirkrichtung abhängt von der durch den vorhergehenden Benutzer bestimmten Ausgangslage und dem durch den Drucksensor bestimmten Auflagedruck des jetzigen Benutzers zu Beginn der Verstellung.

Aus der Beschreibung in DE 196 44 376 A1 ergibt sich, daß dabei die verschiedenen Teile des Fahrzeugsitzes jeweils einzeln oder beliebig durch eine Beaufschlagung der Drucksensoren verstellt werden können. Somit sind auch ungewollte Verstellbewegungen nicht ausgeschlossen und der Benutzer könnte entsprechend große Mühe haben, eine ergonomisch günstige und dennoch für ihn bequeme Sitzposition zu finden.

Daneben sind Sitze anderer Gattung als Fahrzeugsitze bekannt, bei denen mehrere Stellantriebe relativ zueinander und relativ zu dem an dem Fahrzeugboden gehaltenen Sitzträger verstellbar und dabei von dem Benutzer jeweils getrennt voneinander betätigbar sind. Auch dabei kann der Benutzer die dem Sitzteil zugeordneten Stellantriebe und die dem Rückenlehnenteil zugeordneten Stellantriebe jeweils derart verstellen, bis ihm die Relativposition von Sitzteil und Rückenlehnenteil komfortabel erscheint. Zum Betätigen dieser Stellantriebe sind diesem Fahrzeugsitz anderer Gattung mehrere Betätigungsschalter zugeordnet, die vom Benutzer zur Durchführung kontrollierter Stellbewegungen meist nacheinander betätigt werden. Auch diese Sitze sind insbesondere für ungeübte Benutzer nur mit einem größeren Aufwand zu bedienen.

Es besteht deshalb die Aufgabe, einen Sitz der eingangs erwähnten Art zu schaffen, der besonders komfortabel und vor allem einfach zu handhaben ist und bei dem unterschiedliche Verstellbewegungen jeweils zu einer ergonomisch günstigen Sitzposition führen.

Die erfindungsgemäße Lösung dieser Aufgabe besteht bei einem Sitz der eingangs genannten Art darin, daß das mindestens eine Sitzteil und das wenigstens eine Rückenlehnenteil jeweils in einer Zwangsführung verstellbar geführt sind, daß das Sitzteil und das Rückenlehnenteil über eine Gelenkachse verschwenkbar miteinander verbunden sind, daß das Sitzteil und das Rückenlehnenteil jeweils mit Abstand zur Gelenkachse geführt und um ihre Führungsachsen oder Führungszapfen verdrehbar sind, und daß die den Sitz- und Rückenlehnenteilen zugeordneten Stellantriebe insbesondere über einen gemeinsamen Freigabeschalter zeitgleich aktivierbar sind, wobei der wenigstens eine Körperpositionsmelder als Abstandsmeßeinrichtung ausgebildet ist.

Durch die Führung des Sitzteiles und des Rückenlehnenteiles in Form einer Zwangsführung und durch die gelenkige Verbindung dieser Teile miteinander wird eine Verstellung eines der Teile zu einer bestimmten Relativposition des anderen Teiles führen, so daß durch die Ausgestaltung dieser Zwangsführungen die individuellen Verstellbewegungen keine unsinnigen Relativpositionen der Teile zueinander ergeben können, sondern jeweils ergonomisch günstige Positionen erreicht werden. Somit kann der Benutzer sehr schnell eine für ihn komfortable und dennoch gleichzeitig ergonomisch günstige Sitzposition einstellen.

Die Zwangsführung für das mindestens eine Sitzteil und/oder das wenigstens eine Rückenlehnenteil kann eine geschlossene Führung sein. Solche geschlossenen Führungen, beispielsweise Langlochungen oder Rohre mit im Rohrinneren verschiebbaren Gegenstücken ergeben eine sehr präzise Führung, die gleichzeitig die jeweils eingestellte Position festlegt und dadurch Schwing- und Wackelbewegungen eines solchen Sitzes verhindert:

Die Zwangsführung oder die geschlossene Führung für das mindestens eine Sitzteil und/oder das wenigstens eine Rückenlehnenteil kann dabei beidseits des Sitzes vorgesehen sein, so daß entsprechend symmetrische Kraftverteilungen möglich sind.

Der Stellantrieb des erfindungsgemäßen Sitzes steht mit wenigstens einem Körperpositionsmelder in Steuerverbindung. Nach Aktivieren des Stellantriebes werden die Steuersignale an den Stellantrieb weitergegeben, so daß dieser das ihm zugeordnete Sitz- und/oder Rückenlehnenteil derart an die vom Benutzer angenommene Körperposition heranfahren oder einer Körperbewegung des Benutzers synchron nachfahren läßt, bis das Sitz- und/oder Rückenlehnenteil am Körper des Benutzers anliegt oder ihm angenähert ist. Somit muß der Benutzer in seiner Körperhaltung nicht der Sitzbewegung folgen und solange probieren, bis der Sitz eine ihm angenehme Sitzposition aufweist; vielmehr paßt sich der erfindungsgemäße Sitz der Körperhaltung des Benutzers an, die dieser als komfortabel empfindet und daher zuvor eingenommen hat oder einnehmen will.

Da die den Sitz- und Rückenlehnenteilen zugeordneten Stellantriebe über einen gemeinsamen Freigabeschalter zeitgleich aktivierbar sind, ist der erfindungsgemäße Sitz mit körpersynchronen Stellbewegungen zu verstellen. Somit kann der Benutzer entsprechend der von ihm bevorzugten Körperhaltung beispielsweise seine Beine anwinkeln und gleichzeitig den Oberkörper nach vorne neigen, während sich die Sitz- und Rückenlehnenteile diesen Körperbewegungen körpersynchron anpassen.

Dabei kann der Freigabeschalter beispielsweise manuell betätigt oder mittels einer Sprach- oder Lauterkennung auch sprachgesteuert werden.

Der erfindungsgemäße Sitz kann beispielsweise als Bürostuhl oder dergleichen Sitzmöbel ausgestaltet werden, wobei der Sitzträger beispielsweise das Stuhlbein bildet. Da in Kraftfahrzeugen verstellbare Sitze schon heute üblich sind und die für die Stellantriebe benötigte Energieversorgung dort in unmittelbarer Sitznähe zur Verfügung steht, bietet es sich insbesondere an, wenn der Sitz als Fahrzeugsitz ausgebildet ist.

Dabei kann die Sitzfläche mehrteilig ausgebildet sein und beispielsweise ein Sitzteil, ein Lumbalteil und ein ebenfalls verstellbares Rückenlehnenteil aufweisen.

Eine einfache Ausführungsform gemäß der Erfindung sieht vor, daß der Körperpositionsmelder als eine Abstandsmeßeinrichtung ausgebildet ist, die vorzugsweise im Bereich des Sitzes angeordnet ist. Eine solche Abstandsmeßeinrichtung kann beispielsweise Ultraschall- oder Infrarotsensoren aufweisen, die etwa im Bereich des Armaturenbretts eines Kraftfahrzeuges angeordnet sind. Möglich ist aber auch, daß die Abstandsmeßeinrichtung induktive Sensoren aufweist, welche die mit einer Körperbewegung verbundene Änderung eines Magnetfeldes oder eines elektrischen Feldes messen.

Zusätzlich oder statt dessen kann es jedoch vorteilhaft sein, wenn zumindest ein Körperpositionsmelder als Drucksensor oder Druckschalter ausgebildet ist, der den ihm zugeordneten Stellantrieb in Abhängigkeit vom Überschreiten oder Unterschreiten definierter Druckbelastungen betätigt oder stoppt. Dabei sieht eine bevorzugte Weiterbildung gemäß der Erfindung vor, daß mindestens ein Körperpositionsmelder, zum Beispiel Drucksensor oder Druckschalter, den ihm zugeordneten Stellantrieb derart ansteuert. Solche Drucksensoren können somit auch die Bewegungsrichtung der Stellantriebe auf einfache Weise steuern. So ist es möglich, daß die Körperpositionsmelder derart auf Druckänderungen reagieren, daß die mit ihnen in Steuerverbindung stehenden Stellantriebe den Sitz solange und in die Richtung verstellen, bis sich an dem betreffenden Körperpositionsmelder wieder ein definierter Mitteldruck einstellt.

Um die erforderlichen Stell- und Anpassungsbewegungen des Sitzes gut steuern zu können, ist es vorteilhaft, wenn ein erster Körperpositionsmelder im Rückenlehnenteil, vorzugsweise im Schulterbereich, und wenn ein zweiter Körperpositionsmelder im Sitzteil, insbesondere an dessen vorderem freien Stirnendbereich, angeordnet ist.

Vor allem in Kombination mit der Zwangsführung des Sitzteiles und des Rückenlehnenteiles, deren gelenkiger Verbindung und der Drehbarkeit dieser Teile ergibt sich eine besonders komfortable Ausführungsform der Erfindung, die außerdem ermöglicht, die Sitzund Rückenlehnenteilen mit möglichst wenigen und eventuell auch kleineren Stellantrieben betätigen und ansteuern zu können. Gleichzeitig werden dadurch trotz der Anpaßbarkeit der verschiedenen Positionen des oder der Sitzteile und des oder der Rückenlehnenteile unsinnige oder unbequeme und insbesondere ergonomisch ungünstige Einstellungen dieser Teile relativ zueinander und insbesondere auch das Ausprobieren solcher ungünstigenEinstellungenmitdementsprechendenzeitverlust durch den Benutzer vermieden.

Vorteilhaft kann es sein, wenn wenigstens ein Stellantrieb als Muskelkraft-unterstützender Stellantrieb ausgebildet ist und wenn das diesem Stellantrieb zugeordnete Sitz- und/oder Rückenlehnenteil insbesondere mittels einer Feststelleinrichtung in der gewählten Sitzposition des Sitzes festlegbar ist. Eine solche Ausführungsform erlaubt ein servounterstütztes Verstellen des Sitzes oder eventuell ein Verstellen des Sitzes allein mit der Muskelkraft des Benutzers. Statt der ansonsten bevorzugten Stellantriebe mit selbsthemmenden Spindeln, die eine Feststelleinrichtung entbehrlich machen, kann bei dieser Ausführungsform der Servo-Stellantrieb beispielsweise als Zahnstangenantrieb ausgebildet sein, der mit einer Feststelleinrichtung zusammenarbeitet.

Vorteilhaft ist es, wenn der Sitzträger des Fahrzeugsitzes mittels eines Stellantriebes relativ zum Fahrzeugboden verstellbar gehalten ist, wenn der Stellantrieb mit einer Steuerung in Steuerverbindung steht und wenn die Steuerung den Fahrzeugsitz in Abhängigkeit der mittels wenigstens eines Körperpositionsmelders ermittelten personenbezogenen Daten und/oder des gewählten Neigungswinkels des Sitzteiles verstellt. Ist der Körperpositionsmelder als Drucksensor ausgebildet, kann beipielsweise das auf dem Sitzteil lastende Körpergewicht des Benutzers erfaßt, in der Steuerung einer üblichen Körpergröße zugeordnet und anschließend der Sitz relativ zum Fahrzeugboden derart verstellt werden, daß der Benutzer eine ausreichende Beinfreiheit und/oder einen ausreichenden Abstand etwa von der Frontscheibe des Fahrzeuges hat. Zusätzlich oder statt dessen kann der gewählte Neigungswinkel des Sitzteiles erfaßt, mit einer üblichen Körpergröße verglichen und der Sitz anschließend verstellt werden.

Eine weitere Ausgestaltungsmöglichkeit der Erfindung kann darin bestehen, daß der oder die Körperpositionsmelder Weg- oder Bewegungsmesser sind. Somit können entsprechende Bewegungen des Benutzers zur Erlangung einer bestimmten Einstellung der einzelnen Teile des Sitzes gemessen und in entsprechende Verstellbewegungen umgewandelt werden, die dann außerdem auch wieder gespeichert werden können, um die jeweils gefundene Sitzposition auch nach einer erneuten Verstellung schnell wiederfinden zu können. Ein Weg- oder Bewegungsmesser erlaubt dabei eine präzisere Umsetzung in eine Einstellbewegung, weil eine feinfühligere Betätigung möglich ist, insbesondere, wenn ein entsprechend größerer Weg gegenüber einem Drucksensor zu der jeweiligen Verstellung führt.

Der oder die Körperpositionsmelder können ein schwenkbarer oder linearer Bewegungsaufnehmer, beispielsweise ein Schwenkhebel oder eine Wippe oder eine quer zu ihrer Oberfläche verstellbare Platte sein, die mit zumindest einem Potentiometer oder dergleichen Meßwertaufnehmer gekoppelt ist und zusammenwirkt. Dabei kann entweder bei einer Wippe oder einem Schwenkhebel ein an der Drehachse angeordneter Drehpotentiometer oder aber auch ein linearer Potentiometer vorgesehen sein, der auch bei einer verstellbaren Platte zweckmäßig ist.

Der als Körperpositionsmelder vorgesehene Weg- oder Bewegungsmesser, insbesondere der schwenkbare oder linear bewegbare Bewegungsaufnehmer kann dabei gegen eine Rückstellkraft in eine ausgelenkte Position bewegbar und durch die Rückstellkraft, beispielsweise eine Feder und/oder die Polsterung des Sitzes, in eine Ausgangsstellung zurückbewegbar sein. Dies ergibt eine besonders einfache Möglichkeit, einen Körperpositionsmelder innerhalb einer Polsterung eines Sitzes versteckt und somit auch platzsparend und dennoch effektiv unterzubringen.

Nachstehend sind Ausführungsbeispiele der Erfindung anhand der Zeichnung näher beschrieben. Es zeigt in zum Teil schematisierter Darstellung:
- Fig. 1: einen in einer Seitenansicht dargestellten Fahrzeugsitz, der ein Sitzteil und ein Rückenlehnenteil hat, die mittels zugeordneter Stellantriebe relativ zueinander und relativ zu einem Sitzträger verstellbar sind, wobei das Rückenlehnenteil in Fig. 1 eine nahezu aufrechte Sitzposition hat,
- Fig. 2: den Sitz aus Fig. 1 in einer Sitzposition, in welcher das Rückenlehnenteil entgegen der Fahrtrichtung zurückgestellt und der Winkel zwischen Sitzteil und Rückenlehnenteil vergrößert ist,
- Fig. 3: in noch stärker schematisierter Darstellung einen Fahrzeugsitz, bei welchem sowohl im Sitzteil als auch im Rückenlehnenteil jeweils ein wippenartiger Schwenkhebel als Weg- oder Bewegungsaufnehmer angeordnet ist, sowie
- Fig. 4: eine der Fig. 3 entsprechende Darstellung, bei welcher sowohl im Sitzteil als auch im Rückenlehnenteil jeweils eine quer zu ihrer Erstreckung und Oberfläche verstellbare Platte als Weg- und Bewegungsmesser mit einem linearen Potentiometer zusammenwirkend angeordnet ist.

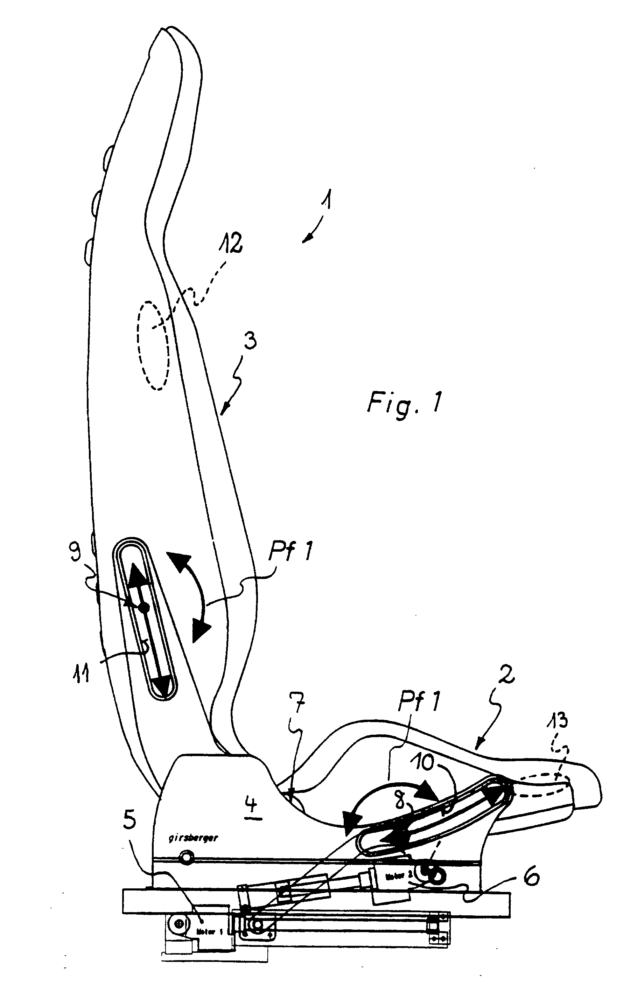

In den Fig. 1 und 2 sowie 3 und 4 ist jeweils ein Sitz 1 dargestellt, der hier als Fahrzeugsitz ausgestaltet ist.

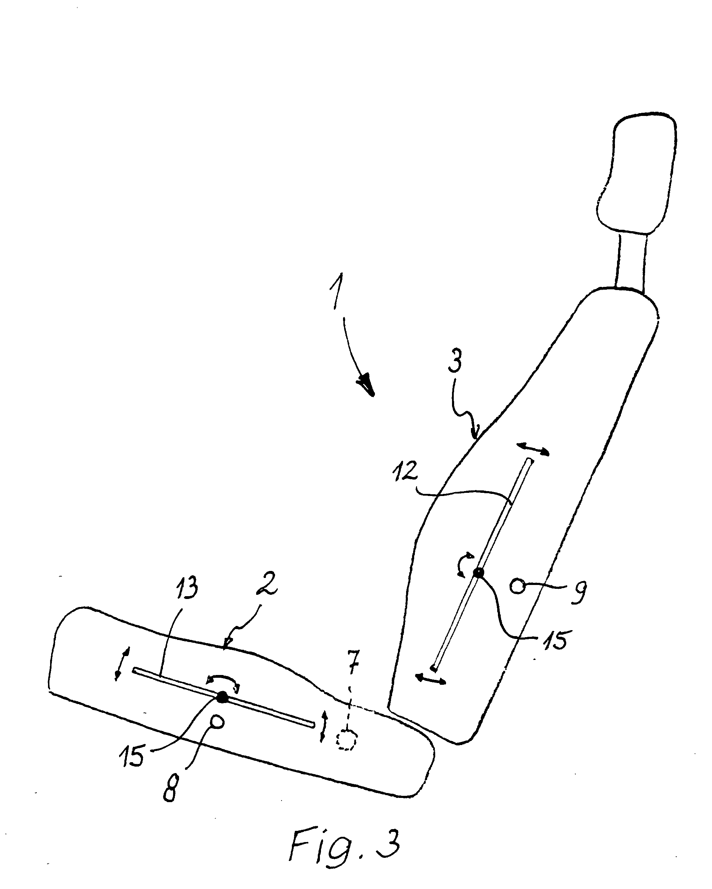

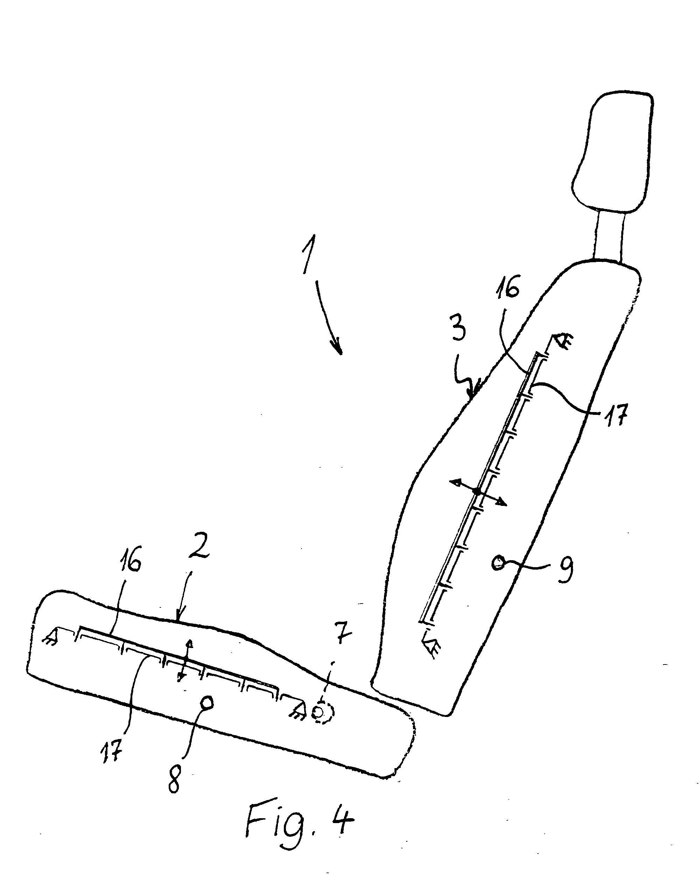

Dabei ist dieser Sitz 1 in den Figuren 1 un 2 deutlicher dargestellt und die diesbezüglichen nachfolgenden Erläuterungen und Beschreibungen gelten auch für die Sitze 1 gemäß den Figuren 3 und 4, bei denen diese zusätzlichen Teile fehlen und nur ein Sitzteil 2 und ein Rückenlehnenteil 3 , mit Kopfstütze, dargestellt sind, nicht aber Sitzträger 4 und damit zusammenwirkende Teile.

Der Sitz 1 hat ein Sitzteil 2 und ein Rückenlehnenteil 3, die an einem Sitzträger 4 gehalten und relativ zu diesem sowie relativ zueinander verstellbar sind. Der Sitzträger 4 ist an dem hier nicht weiter dargestellten Fahrzeugboden des Kraftfahrzeuges befestigt.

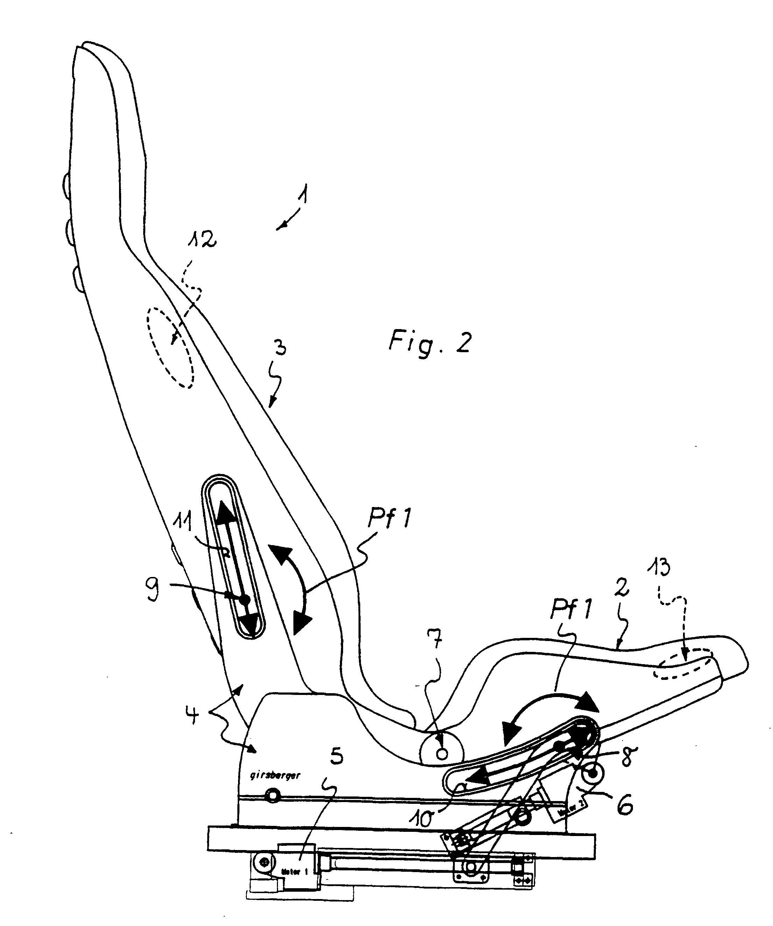

Zum Verstellen der Sitzposition sind Stellantriebe 5, 6 vorgesehen, die an der Unterseite des Sitzteiles 2 angreifen, Wie aus einem Vergleich der Fig. 1 und 2 deutlich wird, sind das Sitzteil 2 sowie das damit über eine Gelenkachse 7 verschwenkbar verbundene Rückenlehnenteil 3 des Sitzes 1 in einer Zwangsführung geführt, die hier als Kulissenführung ausgebildet ist. Sowohl das Sitzteil 2 als auch das Rückenlehnenteil 3 sind dazu jeweils mit Abstand zur Gelenkachse 7 mit einer Führungsachse 8, 9 in einer Führungs- oder Kulissenbahn 10, 11 geführt.

Während die dem Sitzteil 2 zugeordnete Führungsbahn 10 kreisbogenförmig in Fahrtrichtung nach oben verläuft, ist die Führungsachse 9 des Rückenlehnenteils 3 in einer entgegen der Fahrtrichtung nach oben geneigten linearen Führungsbahn 11 geführt.

Wie durch die Drehrichtungspfeile Pf1 angedeutet ist, sind das Sitzteil 2 und das Rückenlehnenteil 3 jeweils um ihre Führungsachsen oder Führungszapfen 8, 9 verdrehbar in ihren Führungsbahnen 10, 11 gehalten. Während mittels des Stellantriebes 5 die Neigung der aus Sitzteil 2 und Rückenlehnenteil 3 gebildeten Sitzschale insgesamt verändert und damit auch den Neigungswinkel des Rückenlehnenteiles 3 verstellt werden kann, ist mit Hilfe des Stellantriebes 6 der Winkel zwischen Sitzteil 2 und Rückenlehnenteil 3 zu verstellen.

Zum Verstellen des Sitzteiles 2 und des Rückenlehnenteiles 3 sind Körperpositionsmelder 12, 13 vorgesehen, die zum Heranfahren oder Nachfahren des Sitzteiles 2 und des Rückenlehnenteiles 3 an die vom Benutzer eingenommene Körperposition oder die von ihm durchgeführten Körperbewegungen mit den Stellantrieben 5, 6 in Steuerverbindung stehen. Die Körperpositionsmelder 12, 13 sind unterhalb der Sitzpolster des Sitzes 1 untergebracht und somit nicht ohne weiteres zu erkennen. Während der im Rückenlehnenteil 3 im Schulterbereich angeordnete Körperpositionsmelder 12 dem Stellantrieb 5 zugeordnet ist, steht der im vorderen freien Stirnendbereich des Sitzteiles 2 vorgesehen Körperpositionsmelder 13 mit dem Stellantrieb 6 in Steuerverbindung.

Nach Aktivieren der Stellenantriebe 5, 6 werden die Steuersignale der Körperpositionsmelder 12, 13 an die Stellantriebe 5, 6 derart weitergegeben, daß diese das ihnen zugeordnete Sitz- und/oder Rückenlehnenteil 2, 3 derart an die vom Benutzer eingenommene Körperposition heranfahren läßt, bis das Sitzteil 2 und/oder das Rückenlehnenteil 3 am Körper des Benutzers anliegt oder ihm weitgehend angenähert ist. Ebensogut kann der Sitz 1 den in Fahrtrichtung oder entgegen der Fahrtrichtung gerichteten Körperbewegungen bzw. den nach oben oder nach unten gerichteten Körperbewegungen des Oberschenkels des Benutzers praktisch körpersynchron folgen. Somit paßt sich der hier dargestellte Sitz 1 der Körperhaltung des Benutzers an, die dieser als komfortabel empfindet und daher zuvor eingenommen hat.

Die Stellantriebe 5, 6 sind über einen gemeinsamen Freigabeschalter zu aktivieren. Bei Betätigen dieses Freigabeschalters, der beispielsweise am Lenkrad angeordnet ist, sind somit körpersynchronische Stellbewegungen sowohl des Sitzteiles 2 als auch des Rückenlehnenteiles 3 möglich.

Die Körperpositionsmelder 12, 13 sind hier jeweils als Druckschalter oder Drucksensor ausgebildet, wobei diese Körperpositionsmelder 12, 13 mit einer hier nicht weiter dargestellten und mit den Stellantrieben 5, 6 verbundenen Steuerung in Steuerverbindung stehen. Die Körperpositionsmelder 12, 13 steuern die ihnen zugeordneten Stellantriebe derart, daß diese das ihnen zugeordnete Sitzteil 2 und/oder Rückenlehnenteil 3 bei Überschreiten eines ersten Druckwertes in die dem Benutzer abgewandte Richtung bewegt und bei Unterschreiten eines zweiten Druckwertes in Richtung des Benutzers verstellt. Die auf Druckänderungen reagierenden Körperpositionsmelder 12, 13 lassen die mit ihnen in Steuerverbindung stehenden Stellantriebe 5, 6 solange und in die Richtung Stellbewegungen durchführen, bis sich an dem betreffenden Körperpositionsmelder 12, 13 wieder ein definierter Mitteldruck einstellt.

Lehnt sich der Benutzer mit der Schulter nach vorne, wird diese Druckentlastung des Körperpositionsmelders 12 an die Steuerung weitergegeben, die den Stellantrieb 5 betätigt und die aus Sitzteil 2 und Rückenlehnenteil 3 gebildete Sitzschale in Fahrtrichtung nach vorne verfahren und der Körperbewegung folgen läßt. Winkelt dagegen der Benutzer seine Beine stärker an, so wird der Körperpositionsmelder 13 entlastet, wodurch der Stellantrieb 6 das Sitzteil 2 nachfahren läßt, bis der Körperpositionsmelder 13 wieder vom Körpergewicht belastet wird und die Stellantriebe 5, 6 durch Lösen des Freigabeschalters deaktiviert werden können.
Drückt der Benutzer seine Schulter entgegen der Fahrtrichtung nach hinten und belastet den Körperpositionsmelder 12 zusätzlich, wird die aus Sitzteil 2 und Rückenlehnenteil 3 gebildete Sitzschale mittels des Stellantriebes 5 entgegen der Fahrtrichtung nach hinten verschwenkt und der Sitz 1 kann auch dieser Körperbewegung folgen. Eine zusätzliche Belastung des Körperpositionsmelders 13 durch die Beine des Benutzers führt dagegen zu einer Stellbewegung des Stellantriebes 6, welche den vorderen freien Stirnendbereich des Sitzteiles 2 nach unten fahren und den Winkel zwischen Sitzteil 2 und Rückenlehnenteil 3 vergrößern läßt.

Da die Stellantriebe 5, 6 über einen gemeinsamen Freigabeschalter aktiviert werden können, kann der Benutzer entsprechend der von ihm bevorzugten Körperhaltung beispielsweise seine Beine anwinkeln und gleichzeitig den Oberkörper nach vorne neigen, während sich das Sitzteil 2 und das Rückenlehnenteil 3 dieser Körperbewegung körpersynchron anpassen.

Die elektrischen Stellantriebe 5, 6 sind hier als selbsthemmende Spindelantriebe ausgebildet, welche die Sitzposition auch ohne eine zusätzliche Feststelleinrichtung halten.

Die hier als Körperpositionsmelder dienenden Druckschalter oder Drucksensoren können beispielsweise durch einen Druckschlauch gebildet werden, dessen Innendruck an eine Druckmeßeinrichtung weitergegeben wird. Ein solcher Druckschlauch kann auch eine flächige Belastung des Sitzteiles 2 und/oder des Rückenlehnenteiles 3 gut erfassen.

Um dem Benutzer einen höchstmöglichen Bedienungskomfort zu bieten, kann es vorteilhaft sein, wenn die Stellantriebe vom Benutzer wahlweise auch separat beispielsweise über Betätigungschalter betätigt werden können. Möglich ist auch, daß über die hier nicht weiter dargestellte Steuerung "Memory"-Funktionen abrufbar sind, welche den Sitz 1 mittels der Stellantriebe 5, 6 in eine Sitzposition bewegen, die einem bestimmten Benutzer zugeordnet ist.

Der Sitz 1 gemäß Fig. 3 entspricht dem vorstehend beschriebenen Sitz 1, was Sitzträger 4, Stellantriebe 5, 6, Gelenkachsen 7, Führungsachsen 8 und 9 und Führungs- und Kulissenbahnen 10 und 11 sowie die einzelnen Bewegungen betrifft.

Lediglich die Körperpositionsmelder 12 und 13 sind in Fig. 3 und auch in Fig. 4 abweichend als Weg- oder Bewegungsmesser ausgestaltet.

Fig. 3 zeigt schematisiert, daß die Körperpositionsmelder 12 und 13 jeweils schwenkbare Bewegungsaufnehmer, nämlich Wippen sein können, die um eine etwa mittlere Achse 15 schwenkbar ist. Je mehr diese Wippe verschwenkt wird, um so weiter wird das jeweilige Sitzteil in seiner Position ausgelenkt oder bewegt. Statt einer Wippe könnte auch ein einarmiger Hebel relativ zu der Achse 15 schwenkbar innerhalb des Sitzteiles 2 oder des Rückenlehnenteiles 3 verlaufen. Dabei erkennt man, daß die Bewegung etwa in Fahrtrichtung erfolgen kann.

Fig. 4 zeigt demgegenüber eine quer zu ihrer Oberfläche verstellbare Platte 16, die mit einem feststehenden Potentiometer 17 oder dergleichen Meßwertaufnehmer gekoppelt ist und zusammenwirkt und durch die relative Verstellbewegung gegenüber diesem Potentiometer 17 ein Maß für die jeweilige Bewegung ergibt, die in eine entsprechende Positionierbewegung umgesetzt wird.

Der jeweils als Körperpositionsmelder 12 oder 13 vorgesehene Wegoder Bewegungsmesser gemäß Fig. 3 oder 4 ist dabei gegen eine Rückstellkraft in die ausgelenkte Position bewegbar, also durch diese Rückstellkraft, beispielsweise eine nicht näher dargestellte Feder und/oder die Polsterung des Sitzes, in seine Ausgangsstellung zurückbewegbar.

Dabei bleiben die Vorzüge der Koppelung des Sitzteiles 2 mit dem Rückenteil 3 über das Gelenk 7 und die Zwangsführung dieser Teile erhalten, so daß auch bei Verwendung solcher Weg- oder Bewegungsmesser der Benutzer schnell eine individuell für ihn angenehme und bequeme, aber dennoch in jedem Falle ergonomisch günstige Sitzposition einstellen kann.

Das gleiche gilt, wenn stattdessen als Körperpositionsmelder eine Abstandsmeßeinrichtung im Bereich des Sitzes angeordnet ist, die vom Benutzer zur Verstellung des Sitzes durchgeführte Bewegungen als Veränderung des Abstandes dieses Benutzers von dieser Abstandsmeßeinrichtung detektiert und entsprechende Verstellbewegung an dem Sitz 1 durchführt.

Die dargestellten Ausführungsformen des Sitzes 1 zeichnen sich durch einen hohen Sitzkomfort sowie eine besonders einfache Handhabung aus, bei der aber gleichzeitig unsinnige relative Einstellbewegungen zwischen Sitzteil 2 und Rückenteil 3 durch deren spezielle Koppelung über das Gelenk 7 und deren Zwangsführung und damit einhergehende Zeitverluste bei der Verstellung des Sitzes 1 und seiner Teile vermieden werden können.

Insgesamt ergibt sich- ein Sitz 1 mit zumindest einem Sitzund/oder Rückenlehnenteil 2, 3, welches an einem Sitzträger 4 gehalten und relativ zu diesem mittels eines Stellantriebes 5, 6 verstellbar ist. Für den Sitz 1 ist zweckmäßig, daß der Stellantrieb 5, 6 mit wenigstens einem Körperpositionsmelder 12, 13 in Steuerverbindung steht zum Heranfahren oder Nachfahren des wenigstens einen Sitz- zumindest einen Rückenlehnenteiles 2, 3 an die von einer auf dem Sitz befindlichen Person eingenommene Körperposition oder zum Nachfahren des wenigstens einen Sitzund/oder Rückenlehnenteiles 2, 3 entsprechend einer Körperbewegung der auf dem Sitz 1 befindlichen Person. Dabei sind Sitzteil 2 und Rückenteil 3 in einer Zwangsführung verstellbar geführt und über eine Gelenkachse 7 schwenkbar miteinander verbunden, wobei außerdem das Sitzteil 2 und das Rückenteil 3 jeweils mit Abstand zu dieser Gelenkachse 7 geführt und um ihre Führungsachsen oder Führungszapfen 8, 9 verdrehbar sind. Dieser Sitz 1 ist besonders komfortabel und einfach zu handhaben und hat aufgrund der Zwangsführung und der Verbindung von Sitzteil und Rückenteil in jeder Einstellposition auch eine für den Benutzer ergonomisch günstige Anordnung.

## Patentansprüche

1. Sitz (1) mit zumindest einem Sitz- und wenigstens einem Rückenlehnenteil (2, 3), welche an einem Sitzträger (4) gehalten und relativ zu diesem mittels Stellantrieben (5, 6) verstellbar sind, wobei die Stellantriebe (5, 6) mit wenigstens einem Körperpositionsmelder (12, 13) in Steuerverbindung stehen zum Heranfahren oder Nachfahren des wenigstens einen Sitz- und mindestens einen Rückenlehnenteiles (2, 3) an die von einer auf dem Sitz befindlichen Person eingenommene Körperposition oder zum Nachfahren des wenigstens einen Sitz- und mindestens einen Rückenlehnenteiles entsprechend einer Körperbewegung der auf dem Sitz befindlichen Person, **dadurch gekennzeichnet, daß** das mindestens eine Sitzteil (2) und das wenigstens eine Rückenlehnenteil (3) jeweils in einer Zwangsführung verstellbar geführt sind, daß das Sitzteil (2) und das Rückenlehnenteil (3) über eine Gelenkachse (7) verschwenkbar miteinander verbunden sind, daß das Sitzteil (2) und das Rückenlehnenteil (3) jeweils mit Abstand zur Gelenkachse (7) geführt und um ihre Führungsachsen oder Führungszapfen (8, 9) verdrehbar sind, und daß die den Sitzund Rückenlehnenteilen (2, 3) zugeordneten Stellantriebe (5, 6) über einen gemeinsamen Freigabeschalter zeitgleich aktivierbar sind, wobei der wenigstens eine Körperpositionsmelder (12, 13) als Abstandsmeßeinrichtung ausgebildet ist.

2. Sitz nach Anspruch 1, **dadurch gekennzeichnet, daß** die zwangsführung für das mindestens eine Sitzteil (2) und/oder das wenigstens eine Rückenlehnenteil (3) eine geschlossene Führung ist.

3. Sitz nach Anspruch 1 oder 2, **dadurch gekennzeichnet, daß** die Zwangsführung oder geschlossene Führung für das mindestens eine Sitzteil (2) und/oder das wenigstens eine Rückenlehnenteil (3) beidseits des Sitzes (1) vorgesehen ist.

4. Sitz nach einem der Ansprüche 1 bis 3, **dadurch gekennzeichnet, daß** der Sitz (1) als Fahrzeugsitz ausgebildet ist.

5. Sitz nach einem der Ansprüche 1 bis 4, **dadurch gekennzeichnet, daß** der Sitz (1) wenigstens ein Sitzteil (2) und zumindest ein Rückenlehnenteil (3) hat und daß die Sitzund Rückenlehnenteile (2, 3) jeweils relativ zum Sitzträger (4) sowie relativ zueinander verstellbar sind.

6. Sitz nach einem der Ansprüche 1 bis 5, **dadurch gekennzeichnet, daß** zumindest ein Körperpositionsmelder als Abstandsmeßeinrichtung ausgebildet ist, die vorzugsweise im Bereich des Sitzes angeordnet ist.

7. Sitz nach einem der Ansprüche 1 bis 6, **dadurch gekennzeichnet, daß** zumindest ein Körperpositionsmelder als Drucksensor oder Druckschalter (12, 13) ausgebildet ist, der den ihm zugeordneten Stellantrieb (5, 6) in Abhängigkeit vom Überschreiten oder Unterschreiten definierter Druckbelastungen betätigt oder stoppt.

8. Sitz nach einem der Ansprüche 1 bis 7, **dadurch gekennzeichnet, daß** mindestens ein Körperpositionsmelder (12, 13) den ihm zugeordneten Stellantrieb (5, 6) derart ansteuert, daß dieser (5, 6) das dazugehörige Sitzteil (2) und/oder Rückenlehnenteil (3) bei Überschreiten eines ersten Druckwertes in die dem Benutzer abgewandte Richtung bewegt und bei Unterschreiten eines zweiten Druckwertes in Richtung des Benutzers verstellt.

9. Sitz nach einem der Ansprüche 1 bis 8, **dadurch gekennzeichnet, daß** zumindest ein Körperpositionsmelder (12, 13) derart auf Druckänderungen reagiert, daß wenigstens ein mit ihm in Steuerverbindung stehender Stellantrieb (5, 6) den Sitz (1) solange und in die Richtung verstellt, bis sich am Körperpositionsmelder (12, 13) wieder ein definierter Mitteldruck einstellt.

10. Sitz nach einem der Ansprüche 1 bis 9, **dadurch gekennzeichnet, daß** ein erster Körperpositionsmelder (12) im Rückenlehnenteil (3), vorzugsweise im Schulterbereich, und daß ein zweiter Körperpositionsmelder (13) im Sitzteil (2), insbesondere an dessen vorderem freien Stirnendbereich, angeordnet ist.

11. Sitz nach einem der Ansprüche 1 bis 10, **dadurch gekennzeichnet, daß** wenigstens ein Stellantrieb als Muskelkraft-unterstützender Stellantrieb ausgebildet ist und daß das diesem Stellantrieb zugeordnete Sitzteil und/oder Rückenlehnenteil insbesondere mittels einer Feststelleinrichtung in der gewählten Sitzposition des Sitzes festlegbar ist.

12. Sitz nach einem der Ansprüche 1 bis 11, **dadurch gekennzeichnet, daß** der Sitzträger des Fahrzeugsitzes mittels eines Stellantriebes relativ zum Fahrzeugboden verstellbar gehalten ist, daß der Stellantrieb mit einer Steuerung in Steuerverbindung steht und daß die Steuerung den Fahrzeugsitz in Abhängigkeit der mittels wenigstens eines Körperpositionsmelders ermittelten personenbezogenen Daten und/oder des gewählten Neigungswinkels des Sitzteiles verstellt.

13. Sitz nach einem der Ansprüche 1 bis 12, **dadurch gekennzeichnet, daß** der/die Körperpositionsmelder (12, 13) ein Weg- oder Bewegungsmesser ist/sind.

14. Sitz nach einem der Ansprüche 1 bis 13, **dadurch gekennzeichnet, daß** der oder die Körperpositionsmelder (12, 13) ein schwenkbarer oder linearer Bewegungsaufnehmer, beispielsweise ein Schwenkhebel oder eine Wippe oder eine quer zu ihrer Oberfläche verstellbare Platte (16) ist, die mit zumindest einem Potentiometer (17) oder dergleichen Meßwertaufnehmer gekoppelt ist und zusammenwirkt.

15. Sitz nach einem der Ansprüche 1 bis 14, **dadurch gekennzeichnet, daß** der als Körperpositionsmelder (12, 13) vorgesehene Weg- oder Bewegungsmesser, insbesondere der schwenkbare oder linear bewegbare Bewegungsaufnehmer gegen eine Rückstellkraft in eine ausgelenkte Position bewegbar und durch die Rückstellkraft, beispielsweise eine Feder und/oder die Polsterung des Sitzes, in eine Ausgangsstellung zurückbewegbar ist.

## Claims

1. Seat (1) having at least one seat part (2) and at least one back-rest part (3), which parts are retained on a seat support (4) and are displaceable relative to said support by means of adjustment drives (5, 6), the adjustment drives (5, 6) being in controlling connection with at least one body position detector (12, 13) to advance or retract the at least one seat part (2) and at least one back-rest part (3) to the body position assumed by a person situated on the seat or to retract the at least one seat part and at least one back-rest part according to a body movement of the person situated on the seat, **characterised in that** the at least one seat part (2) and the at least one back-rest part (3) are each displaceably guided in a positive guide means, **in that** the seat part (2) and the back-rest part (3) are pivotably interconnected via a - pivotable spindle (7), **in that** the seat part (2) and the back-rest part (3) are each guided at a distance from the pivotable spindle (7) and are rotatable about their guide spindles or guide pins (8, 9), and **in that** the adjustment drives (5, 6), associated with the seat and back-rest parts (2, 3), can be simultaneously activated via a common release switch, the at least one body position detector (12, 13) being in the form of a distance measuring means.

2. Seat according to claim 1, **characterised in that** the positive guide . means for the at least one seat part (2) and/or the at least one back-rest part (3) is a closed guide means.

3. Seat according to claim 1 or 2, **characterised in that** the positive guide means or closed guide means for the at least one seat part (2) and/or the at least one back-rest part (3) is provided on each side of the seat (1).

4. Seat according to one of claims 1 to 3, **characterised in that** the seat (1) is in the form of a vehicle seat.

5. Seat according to one of claims 1 to 4, **characterised in that** the seat (1) has at least one seat part (2) and at least one back-rest part (3), and **in that** the seat part (2) and back-rest part (3) are each displaceable relative to the seat support (4) as well as being displaceable relative to each other.

6. Seat according to one of claims 1 to 5, **characterised in that** at least one body position detector is in the form of a distance measuring means which is preferably disposed in the region of the seat.

7. Seat according to one of claims 1 to 6, **characterised in that** at least one body position detector is in the form of a pressure sensor or pressure switch (12, 13), which actuates or stops the adjustment drive (5, 6), associated therewith, depending on whether specific pressure loads are exceeded or not reached.

8. Seat according to one of claims 1 to 7, **characterised in that** at least one body position detector (12, 13) actuates the adjustment drive (5, 6), associated therewith, in such a manner that said drive (5, 6) moves the associated seat part (2) and/or back-rest part (3) into the direction away from the user if a first pressure value is exceeded and displaces said parts in a direction towards the user if a second pressure value is not reached.

9. Seat according to one of claims 1 to 8, **characterised in that** at least one body position detector (12, 13) reacts to pressure changes in such a manner that at least one adjustment drive (5, 6), which is in controlling connection therewith, displaces the seat (1 ) into the direction until such time as a specific mean pressure is set again at the body position detector 12, 13).

10. Seat according to one of claims 1 to 9, **characterised in that** a first body position detector (12) is disposed in the back-rest part (3), preferably in the shoulder region, and **in that** a second body position detector (13) is disposed in the seat part (2), more especially at the front free end region thereof.

11. Seat according to one of claims 1 to 10, **characterised in that** at least one adjustment drive is in the form of an adjustment drive which assists muscle power, and **in that** the seat part and/or back-rest part associated with this adjustment drive can be secured in the selected position of the seat, more especially by means of a securing means.

12. Seat according to one of claims 1 to 11, **characterised in that** the seat support of the vehicle seat is retained so as to be displaceable relative to the vehicle base by means of an adjustment drive, **in that** the adjustment drive is in controlling connection with a control means, and **in that** the control means displaces the vehicle seat in dependence on the personal data determined by means of at least one body position detector and/or on the selected angle of inclination of the seat part.

13. Seat according to one of claims 1 to 12, **characterised in that** the body position detector/detectors (12, 13) is/are an odometer or movement measurer.

14. Seat according to one of claims 1 to 13, **characterised in that** the body position detector or detectors (12, 13) is or are a pivotable or linear movement sensing means, for example a pivotal lever or a rocker or a plate (16), which is displaceable transversely relative to its surface, which plate is connected to and co-operates with at least one potentiometer (17) or a similar transducer.

15. Seat according to one of claims 1 to 14, **characterised in that** the odometer or movement measurer, provided as the body position detector (12, 13), more especially the pivotable or linearly displaceable movement sensing means, is displaceable into an outwardly deflected position in opposition to a restoring force and can be moved back into an initial position by the restoring force, for example a spring and/or the cushion of the seat.

## Revendications

1. Siège (1) avec au moins une partie de siège et au moins une partie de dossier (2, 3), qui sont maintenues sur un support de siège (4) et peuvent être déplacées par rapport à celui-ci au moyen de mécanismes de commande (5, 6), les mécanismes de commande (5, 6) étant en liaison de commande avec au moins un indicateur de position du corps (12, 13) pour approcher ou éloigner la au moins une partie de siège et au moins une partie de dossier (2, 3) par rapport à la position du corps prise par une personne se trouvant sur le siège ou pour reculer la au moins une partie de siège et au moins une partie de dossier en fonction d'un mouvement du corps de la personne se trouvant sur le siège, **caractérisé en ce que** la au moins une partie de siège (2) et la au moins une partie de dossier (3) sont guidées de façon réglable à chaque fois dans un guidage forcé, **en ce que** la partie de siège (2) et la partie de dossier (3) sont reliées entre elles de façon pivotante au moyen d'un axe articulé (7), **en ce que** la partie de siège (2) et la partie de dossier (3) sont guidées respectivement à distance par rapport à l'axe articulé (7) et peuvent tourner autour de leurs axes de guidage ou tourillons de guidage (8, 9) et **en ce que** les mécanismes de commande (5, 6) attribués aux parties de siège et de dossier (2, 3) peuvent être activés simultanément au moyen d'un interrupteur de libération commun, le au moins un indicateur de position du corps (12, 13) étant réalisé comme un dispositif de mesure d'espacement.

2. Siège selon la revendication 1, **caractérisé en ce que** le guidage forcé pour la au moins une partie de siège (2) et/ou la au moins une partie de dossier (3) est un guidage fermé.

3. Siège selon la revendication 1 ou 2, **caractérisé en ce que** le guidage forcé ou le guidage fermé est prévu pour la au moins une partie de siège (2) et/ou la au moins une partie de dossier (3) des deux côtés du siège (1).

4. Siège selon l'une quelconque des revendications 1 à 3, **caractérisé en ce que** le siège (1) est conçu comme un siège de véhicule.

5. Siège selon l'une quelconque des revendications 1 à 4, **caractérisé en ce que** le siège (1) a au moins une partie de siège (2) et au moins une partie de dossier (3) et **en ce que** les parties de siège et de dossier (2, 3) peuvent être déplacées respectivement par rapport au support de siège (4) et l'une par rapport à l'autre.

6. Siège selon l'une quelconque des revendications 1 à 5, **caractérisé en ce qu'**au moins un indicateur de position de corps est conçu comme un appareil de mesure de distance qui est disposé de préférence dans la zone du siège.

7. Siège selon l'une quelconque des revendications 1 à 6, **caractérisé en ce qu'**au moins un indicateur de position de corps est conçu comme un capteur de pression ou un interrupteur à pression (12, 13), qui actionne ou arrête le mécanisme de commande (5, 6) qui lui est attribué selon qu'il a dépassé ou n'a pas dépassé des charges de pression définies.

8. Siège selon l'une quelconque des revendications 1 à 7, **caractérisé en ce qu'**au moins un indicateur de position de corps (12, 13) amorce le mécanisme de commande (5, 6) qui lui est attribué de telle sorte que celui-ci (5, 6) déplace la partie de siège (2) et/ou la partie de dossier (3) correspondante en cas de dépassement d'une première valeur de pression dans la direction opposée à l'utilisateur et la déplace en direction de l'utilisateur si une seconde valeur de pression n'est pas atteinte.

9. Siège selon l'une quelconque des revendications 1 à 8, **caractérisé en ce qu'**au moins un indicateur de position de corps (12, 13) réagit à des variations de pression de telle sorte qu'au moins un mécanisme de commande (5, 6) étant en liaison de commande avec l'indicateur déplace le siège (1) dans la direction concernée jusqu'à ce qu'une pression moyenne définie s'établisse à nouveau sur l'indicateur de position de corps (12, 13).

10. Siège selon l'une quelconque des revendications 1 à 9, **caractérisé en ce qu'**un premier indicateur de position de corps (12) est disposé dans la partie de dossier (3), de préférence dans la zone de l'épaule, et **en ce qu'**un deuxième indicateur de position de corps (13) est disposé dans la partie de siège (2) en particulier sur sa zone d'extrémité avant libre.

11. Siège selon l'une quelconque des revendications 1 à 10, **caractérisé en ce qu'**au moins un mécanisme de commande est conçu comme un mécanisme de commande assistant la force musculaire et **en ce que** la partie de siège et/ou la partie de dossier attribuée à ce mécanisme de commande peut être fixée en particulier au moyen d'un système de blocage dans la position assise choisie du siège.

12. Siège selon l'une quelconque des revendications 1 à 11, **caractérisé en ce que** le support du siège du véhicule est maintenu déplaçable par rapport au sol du véhicule au moyen d'un mécanisme de commande, **en ce que** le mécanisme de commande est en liaison de commande avec une commande et **en ce que** la commande déplace le siège du véhicule en fonction des données spécifiques à la personne calculées au moyen d'au moins un indicateur de position du corps et/ou de l'angle d'inclinaison choisi de la partie du siège.

13. Siège selon l'une quelconque des revendications 1 à 12, **caractérisé en ce que** le/les indicateurs) de position du corps (12, 13) est/sont un mesureur de déplacement ou de mouvement.

14. Siège selon l'une quelconque des revendications 1 à 13, **caractérisé en ce que** le ou les indicateurs) de position du corps (12, 13) est un enregistreur de mouvement basculant ou linéaire, par exemple un levier pivotant ou un système de bascule ou une plaque (16) déplaçable transversalement par rapport à leur surface, qui est couplé et coopère avec au moins un potentiomètre (17) ou un capteur de valeur de mesure similaire.

15. Siège selon l'une quelconque des revendications 1 à 14, **caractérisé en ce que** le mesureur de déplacement ou de mouvement prévu comme un indicateur de position du corps (12, 13), en particulier l'enregistreur de mouvement basculant ou déplaçable dans le sens linéaire, peut être déplacé contre une force de rappel dans une position déviée et peut être reculé par la force de rappel, par exemple un ressort et/ou le rembourrage du siège, dans une position de départ.
